# EUROPEAN PATENT SPECIFICATION

(11) **EP 1 835 558 B1**
(45) Date of publication and mention of the grant of the patent: **12.01.2011**
(21) Application number: 05809263.6
(22) Date of filing: 24.11.2005
(51) Int. Cl.: H01M 8/02, H01M 8/10, H01M 8/04

(54) **FUEL CELL**
BRENNSTOFFZELLE
PILE A COMBUSTIBLE

(30) Priority: 25.11.2004 JP 2004340209
(43) Date of publication of application: 19.09.2007
(73) Proprietor: KABUSHIKI KAISHA TOSHIBA, Minato-ku, Tokyo 105 (JP)
(72) Inventor: NEGISHI, Nobuyasu, c/o Intell. Property Division,, Minato-Ku, Tokyo 105-8001, (JP); TAKAHASHI, Kenichi c/o Intell. Property Division,, Minato-Ku, Tokyo 105-8001, (JP); KAN, Hirofumi, c/o Intell. Property Division,, Minato-Ku, Tokyo 105-8001, (JP)
(74) Representative: Granleese, Rhian Jane
(86) International application number: PCT/JP2005/021550
(87) International publication number: WO 2006/057283

(56) References cited:
- EP-A- 1 349 227
- JP-A- 2000 106 201
- JP-A- 2000 268 836
- JP-A- 2002 373 677
- JP-A- 2004 079 506
- JP-A- 2004 111 343
- JP-A- 2004 172 111
- JP-A- 2004 200 064
- JP-A- 2004 265 872
- US-A1- 2004 009 381

## Description

### Technical Field

The present invention relates to a fuel cell having a system in which a vaporized fuel obtained by vaporizing a liquid fuel is supplied to an anode catalyst layer. More particularly, the present invention relates to a fuel cell of which assembling work is easy, and capable of effectively forming collectors for cathode and anode each composed of conductive layer with a high accuracy of position thereof.

### Background Art

In recent years, various electronic devices such as personal computer, cellular phone or the like have been manufactured to be miniature in size in accordance with a remarkable development of semiconductor technique, and a fuel cell has been tried to be adopted as a power source for these small-sized electronic devices. The fuel cell has advantages such that it can generate an electrical power by only being supplied with the fuel and the oxidizing reagent, and the power generating operation can be continuously performed as far as only the fuel is supplied to the cell. Due to above advantages, when the miniaturization of the fuel cell is realized, it can be said that the fuel cell is a really advantageous system.

In particular, a direct methanol fuel cell (DMFC) uses methanol having a high energy density as the fuel, and can directly extract a current from methanol at an electrode catalyst. Therefore, the fuel cell does not require a reformer for reforming the methanol, so that the fuel cell can be formed in a compact size, and a handling of the fuel is safe and easy in comparison with a hydrogen gas fuel, so that the fuel cell has been expected as a power source for the compact electronic devices.

As a method of supplying the fuel into DMFC, the following types have been adopted. Namely, there are: a gas-fuel supplying type DMFC in which a liquid fuel is vaporized and the vaporized fuel gas is supplied into the fuel cell by means of a blower or the like; a liquid-fuel supplying type DMFC in which a liquid fuel is supplied, as it is, into the fuel cell by means of a pump or the like; and an internal-vaporizing type DMFC as disclosed in a patent document 1 (Japanese Patent No. 3413111).

The internal-vaporizing type DMFC shown in the patent document 1 comprises: a fuel penetrating layer for retaining the liquid fuel; and a fuel vaporizing layer for vaporizing the liquid fuel and diffusing a vaporized component of the liquid fuel retained in the fuel penetrating layer, so that the vapor of the liquid fuel is supplied from the fuel vaporizing layer to a fuel pole (anode). In the fuel cell of the patent document 1, there is used a methanol aqueous solution as the liquid fuel prepared by mixing methanol with water at a molar ratio of about 1:1, and both the methanol and water in a form of a vaporized gas mixture is supplied to the fuel pole.

According to the conventional internal-vaporizing type DMFC shown in the patent document 1, a sufficiently high output power characteristic could not be obtained. Concretely, a vapor pressure of water is relatively lower than that of methanol, and a vaporization rate of water is relatively slow in comparison with that of methanol. Therefore, when the methanol together with water are tried to be supplied to the fuel pole, a supplying amount of water with respect to that of methanol becomes relatively deficient. As a result, a resistance of a reaction for internal reforming of methanol is disadvantageously increased, so that the sufficiently high output power characteristic could not be obtained.

Patent Document 1: Patent Gazette of Japanese Patent No. 3413111

### Disclosure of the Invention

Further, in the conventional internal-vaporizing type DMFC shown in the patent document 1, an operation of arranging (positioning) an anode conductive layer to an anode catalyst layer side of a membrane electrode assembly and an operation of arranging a cathode conductive layer to a cathode catalyst layer side of the membrane electrode assembly are separately and independently performed. Therefore, there had been posed a problem of that the operation of assembling the fuel cell became complicated, and a manufacturing cost of the fuel cell was disadvantageously increased in accordance with an increase of assembling man-hours.

Furthermore, in a case where the catalyst layers were formed to provide a complicated shape in compliance with power-generating characteristics required for the fuel cell, it was difficult to form the conductive layers (collectors) having a shape suitably fit to the catalyst layer, and it was also difficult to control areas of the collector parts through which the fuel passes. Therefore, it was also difficult to control an amount of fuel to be supplied to the anode catalyst layer at a constant rate, so that there was also raised a problem that a stable cell characteristic could not be exhibited.

In addition, large fluctuations in shape and size of the collectors were liable to occur, and positioning of the collectors could not be easily performed, so that short-circuit defects were increased by displacement of the conductive layers thereby to increase a defective fraction of the fuel cell.

The present invention has been achieved to solve the above conventional problems, and an object of the present invention is to provide a fuel cell having a system in which a vaporized fuel obtained by vaporizing a liquid fuel is supplied to an anode catalyst layer, and capable of easily assembling the collector parts of the fuel cell. Particularly, an object of the present invention is to provide a fuel cell of which assembling work is easy and capable of effectively forming collectors for cathode and anode each composed of conductive layer with a high accuracy in position thereof.

To achieve the above object, the present invention provides a fuel cell comprising:
a plurality of cathode catalyst layers provided in a planar direction;
a plurality of anode catalyst layers provided in a planar direction so as to correspond to the cathode catalyst layers,
a membrane electrode assembly including a proton conductive membrane disposed between the cathode catalyst layers and the anode catalyst layers
a plurality of cathode conductive layers provided to a side of the cathode catalyst layers of the membrane electrode assembly; and
a plurality of anode conductive layers provided to a side of the anode catalyst layers of the membrane electrode assembly;
wherein the cathode conductive layers and the anode conductive layers are integrated onto one sheet of insulating film and the integrated insulation film is folded in two so that the membrane electrode assembly is accommodated in an inner space formed in the folded insulating film.

Further, in the above fuel cell, it is preferable to configure the fuel cell such that the cathode conductive layer and the anode conductive layer are composed of a plurality of electrically conductive patterns having shapes corresponding to shapes of the cathode catalyst layer and the anode catalyst layer.

Furthermore, in the above fuel cell, it is also preferable to configure the fuel cell such that the insulating film and the cathode conductive layer are provided with an air intake port for supplying the air to the cathode catalyst layer, and a central axis of the air intake port is substantially coincide with a central axis of an air intake port formed to the outer case.

According to the above fuel cell of the present invention, since the cathode conductive layer and the anode conductive layer are formed under a state where the cathode conductive layer and the anode conductive layer are integrated onto one sheet of the insulating film, a step of forming the conductive layers can be simplified. to be reduced by half in comparison with a case where the cathode conductive layer and the anode conductive layer are separately and independently formed onto the insulating film.

Further, since the fuel cell has a structure in which the one sheet of the insulating film to which both the cathode conductive layer and the anode conductive layer are pasted (adhered) is folded in the middle and the membrane electrode assembly is accommodated in an inner space formed in the half-folded insulating film, it becomes possible to position the cathode conductive layer and the anode conductive layer so as to respectively oppose to the cathode catalyst layer and the anode catalyst layer of the membrane electrode assembly with a high accuracy positioning.

In addition, it becomes easy to position the conductive layer, and the short-circuit defects caused by the displacement of the conductive layer can be eliminated, so that the defective fraction of the fuel cell can be effectively reduced.

Furthermore, even in a case where the catalyst layer is formed in a complicated pattern or shape so as to meet a required power generating characteristic, it is easy to form and position the conductive layer (collector) having a shape in compliance with the shape of the catalyst layer, and easy to control an area of the collector part through which the fuel passes. Therefore, the amount of the fuel to be supplied to the anode catalyst layer can be controlled at a constant rate, so that a stable cell characteristic can be exhibited.

### Brief Description of the Drawings

FIG. 1 is a sectional view schematically showing a structure of a direct methanol type fuel cell according to the present invention.
FIG. 2 is a plan view schematically showing an example of a shape of the insulating film for fixing the conductive layer of the fuel cell.
FIG. 3 is a plan view showing a state where the conductive layer of the fuel cell is fixed on the conductive layer of the fuel cell.
FIG. 4 is a sectional view schematically showing an operation of folding the insulating film fixed with the conductive layer to form an inner space therein, and accommodating a membrane electrode assembly into the inner space.
FIG. 5 is a sectional view schematically showing a power generating part formed by a method comprising the steps of: folding the insulating film fixed with the conductive layer to form the inner space therein; accommodating the membrane electrode assembly into the inner space; and tightly adhering the assembly within the inner space.
FIG. 6 is a perspective deal view showing a state where the fuel cell is assembled by respectively attaching an outer case and a fuel tank to upper and lower portions of the power generating part.

### Best Mode for Carrying Out the Invention

As the results of eager researches and developments conducted by the inventors of this invention, the following technical knowledge and findings were obtained in the fuel cell comprising a fuel vaporizing layer for supplying a vaporized component of the liquid fuel to the anode catalyst layer. Namely, when the cathode conductive layer and the anode conductive layer are formed under a state where both the conductive layers are integrated onto one sheet of the insulating film, a step of forming the conductive layers can be greatly simplified in comparison with a case where the cathode conductive layer and the anode conductive layer are separately and independently formed onto the insulating film.

Further, when the fuel cell is configured to have a structure in which the one sheet of the insulating film to which both the cathode conductive layer and the anode conductive layer are pasted is folded in the middle and the membrane electrode assembly is accommodated in an inner space formed in the half-folded insulating film, it becomes possible to position the cathode conductive layer and the anode conductive layer so as to respectively oppose to the cathode catalyst layer and the anode catalyst layer with a high accuracy positioning. In addition, it becomes easy to position the conductive layer, and the short-circuit defects caused by the displacement of the conductive layer can be eliminated, so that the defective fraction of the fuel cell can be effectively reduced.

Hereunder, a direct methanol fuel cell as one embodiment of the fuel cell according to the present invention will be explained and illustrated in more detail with reference to the attached drawings.

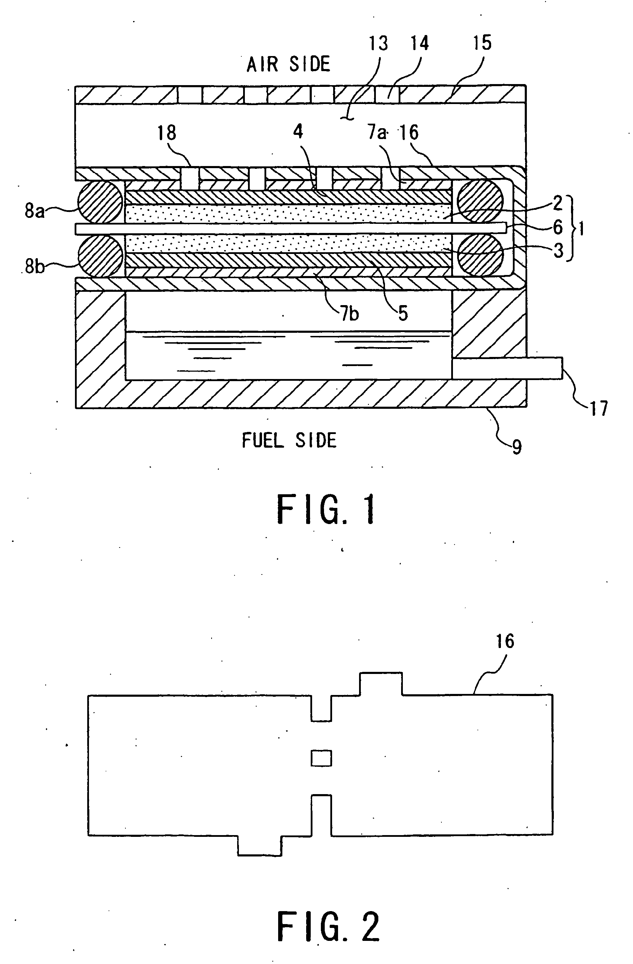

FIG. 1 is a sectional view schematically showing a structure of an embodiment of the direct methanol type fuel cell according to the present invention.

That is, the fuel cell according to this embodiment comprises: a cathode catalyst layer 2; an anode catalyst layer 3; a membrane electrode assembly (MEA)1 including a proton conductive membrane 6 disposed between the cathode catalyst layer 2 and the anode catalyst layer 3; a cathode conductive layer 7a provided to a side of the cathode catalyst layer 2 of the membrane electrode assembly 1; an outer case 15 having an air intake port 14 for supplying an air to the cathode catalyst layer 2; an anode conductive layer 7b provided to a side of the anode catalyst layer 3 of the membrane electrode assembly 1; and a liquid fuel tank 9 for storing a fuel and supplying the fuel to the anode catalyst layer 3; wherein the cathode conductive layer 7a and the anode conductive layer 7b are integrated onto one sheet of insulating film 16 and the integrated film 16 is folded in two so that the membrane electrode assembly 1 is accommodated in an inner space formed in the folded insulating film 16.

Further, the liquid fuel tank 9 is provided with a fuel intake port (fuel injecting port) 17 for injecting the liquid fuel such as methanol or the like. In addition, each of the insulating film 16 and the cathode conductive layer 7a is provided with an air intake port 18 for supplying the air to the cathode catalyst layer 2.

More concretely, as shown in FIG. 1, the membrane electrode assembly (MEA) 1 is configured by comprising: a cathode pole having a cathode catalyst layer 2 and a cathode gas diffusing layer 4; an anode pole having an anode catalyst layer 3 and an anode gas diffusing layer 5; and a proton conductive electrolyte membrane 6 provided at a portion between the cathode catalyst layer 2 and the anode catalyst layer 3.

Examples of a catalyst contained in the cathode catalyst layer 2 and the anode catalyst layer 3 may include: for example, a single substance metal (Pt, Ru, Rh, Ir, Os, Pd or the like) of the platinum group elements; and alloys containing the platinum group elements. As a material for constituting the anode catalyst, Pt-Ru alloy is preferably used. While, as a material for constituting the cathode catalyst, platinum (Pt) is preferably used. However, the materials are not limited thereto. In addition, it is possible to use a support type catalyst using electrically conductive carrier formed of carbon material or the like, and it is also possible to use a non-carrier catalyst.

In addition, examples of a proton conductive material for constituting the proton conductive electrolyte membrane 6 may include: for example, fluoric type resin, such as perfluoro-sulfonic acid, having a sulfonic acid group; hydrocarbon type resin having a sulfonic acid group; and inorganic substances such as tungstic acid, phosphotungstic acid or the like. However, the proton conductive material is not limited thereto.

The cathode gas diffusing layer 4 is laminated on an upper surface side of the cathode catalyst layer 2, and the anode gas diffusing layer 5 is laminated on a lower surface side of the anode catalyst layer 3. The cathode gas diffusing layer 4 fulfills a role of uniformly supplying the oxidizing agent to the cathode catalyst layer 2, and also serves as a collector of the cathode catalyst layer 2. On the other hand, the anode gas diffusing layer 5 fulfills a role of uniformly supplying the fuel to the anode catalyst layer 3, and also serves as a collector of the anode catalyst layer 3.

The cathode conductive layer 7a and the anode conductive layer 7b are respectively contacted to the cathode gas diffusing layer 4 and the anode gas diffusing layer 5. As a material for constituting the cathode conductive layer 7a and the anode conductive layer 7b, for example, a porous layer (for example, mesh member) or foil member composed of a metal material such as gold or the like can be used.

A cathode seal member 8a having a rectangular frame shape is positioned at a portion between the cathode conductive layer 7a and the proton conductive electrolyte membrane 6. Simultaneously, the cathode seal member 8a air-tightly surrounds circumferences of the cathode catalyst layer 2 and the cathode gas diffusing layer 4.

On the other hand, an anode seal member 8b having a rectangular frame shape is positioned at a portion between the anode conductive layer 7b and the proton conductive electrolyte membrane 6. Simultaneously, the anode seal member 8b air-tightly surrounds circumferences of the anode catalyst layer 3 and the anode gas diffusing layer 5. The cathode seal member 8a and the anode seal member 8b are O-rings for preventing the fuel and the oxidizing agent from leaking from the membrane electrode assembly 1.

Under the membrane electrode assembly 1 is provided with a liquid fuel tank 9. In the liquid fuel tank 9, a liquid fuel L such as a liquid methanol, a methanol aqueous solution or the like are accommodated. At an opening end portion of the liquid fuel tank 9 may be provided with a gas-liquid separating membrane as a fuel vaporizing layer such that the opening end portion of the liquid fuel tank 9 is covered with the gas-liquid separating membrane 10. The gas-liquid separating membrane 10 allows only the vaporized component of the liquid fuel to pass therethrough, and not allow the liquid fuel to pass therethrough.

In this connection, the vaporized component of the liquid fuel means a vaporized methanol in a case where the liquid methanol is used as the liquid fuel, while the vaporized component of the liquid fuel means a mixture gas comprising a vaporized component of methanol and a vaporized component of water.

On the other hand, on the cathode conductive layer 7a laminated on an upper portion of the membrane electrode assembly 1 is laminated with a moisture retaining plate 13. On the moisture retaining plate 13 is laminated with an outer case (surface layer) 15 formed with a plurality of air-intake ports 14 for introducing air as oxidizing agent. The outer case (surface layer) 15 performs also a role in increasing a close-contacting property of the membrane electrode assembly 1 by pressing a stack including the membrane electrode assembly 1, so that the outer case (surface layer) 15 is formed of metal such as SUS304 or the like.

The moisture retaining plate 13 performs a role in suppressing an evaporation of water generated at the cathode catalyst layer 2, and also performs a role as an auxiliary diffusing layer for promoting a uniform diffusion of the oxidizing agent to the cathode catalyst layer 2 by uniformly introducing the oxidizing agent to the cathode gas diffusing layer 4.

The fuel cell having the above structure is assembled and manufactured in accordance with, for example, the following steps shown in FIGs. 2 to 6. That is, at first, for the purpose of integrating and fixing the conductive layers for both anode and cathode to an insulating film, there is prepared one sheet of an insulating film 16 having flexibility and a predetermined shape as shown in FIG. 2. As a material for constituting the insulating film 16, various resin materials each having an electrically insulating property are used. Examples of the resin materials may include: thermoplastic polyester resin material such as polyethylene terephthalate (PET) or the like; and various resin materials such as polyimide, polyetherimide, polyether ether ketone (PEEK) (Victorex: trademark, manufactured by PLC Corp.), perfluoro resin, fluorine resin, polyethylene (PE), polyethylene naphthalate (PEN), polypropylene (PP), polyphenylene sulfide (PPS) or the like.

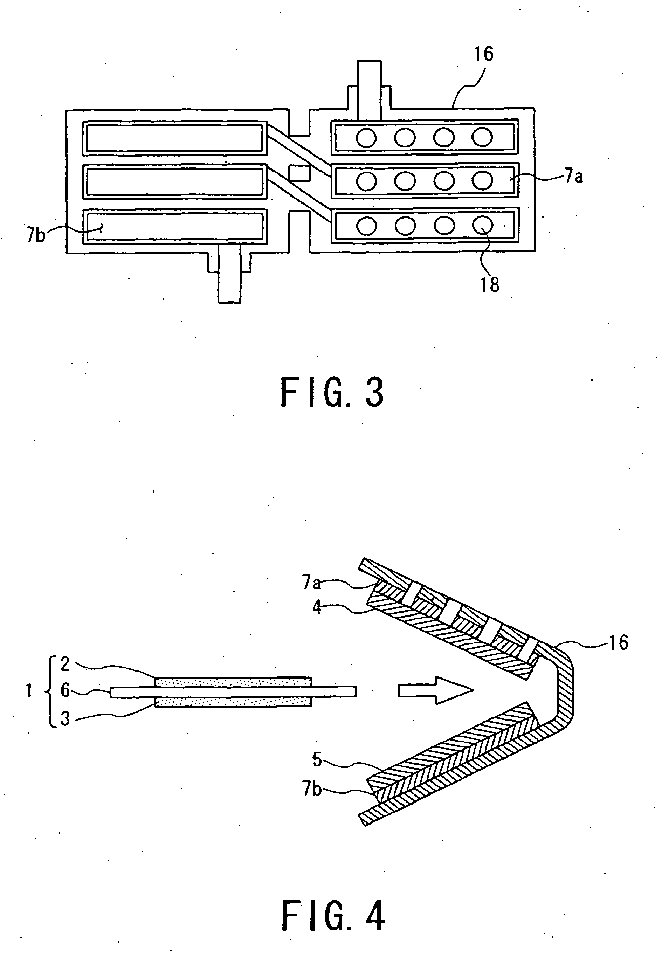

Next, as shown in FIG. 3, the cathode conductive layer 7a and the anode conductive layer 7b composed of gold foil or the like and having a predetermined pattern shapes are integrated and fixed onto the above one sheet of the insulating film 16 by using, for example, an adhesive agent. In this connection, above the cathode conductive layer 7a and the anode conductive layer 7b may be also formed by using a plating method, a sputtering method, a vapor depositing method.

Above the cathode conductive layer 7a and the anode conductive layer 7b may be also composed of a plurality of electrically conductive patterns having shapes corresponding to shapes of the cathode catalyst layer and the anode catalyst layer. According to this structure, even in a case where the catalyst layer is formed in a complicated pattern or shape so as to meet to a required power generating characteristic, it is easy to form the conductive layer (collector) having a shape in compliance with the shape of the catalyst layer, and easy to control an area of the collector part through which the fuel passes. Therefore, the amount of the fuel to be supplied to the anode catalyst layer 3 can be controlled at a constant rate, so that a stable cell characteristic can be exhibited.

Further, the insulating film 16 integrated with the cathode conductive layer 7a is perforated to form an air intake port 18 for supplying the air to the cathode catalyst layer 2.

Next, as shown in FIG. 4, the membrane electrode assembly 1 is prepared by integrally forming the cathode catalyst layer 2 onto a front surface of the proton conductive membrane 6, and by integrally forming the anode catalyst layer 3 onto a rear surface of the proton conductive membrane 6. On the other hand, above the one sheet of the insulating film 16 integrated with the cathode conductive layer 7a and the anode conductive layer 7b is bended and folded in the middle into two so as to form an inner space, and the membrane electrode assembly 1 is accommodated into the inner space so as to be clamped by the folded insulating film 16, thereby to form a power generating part.

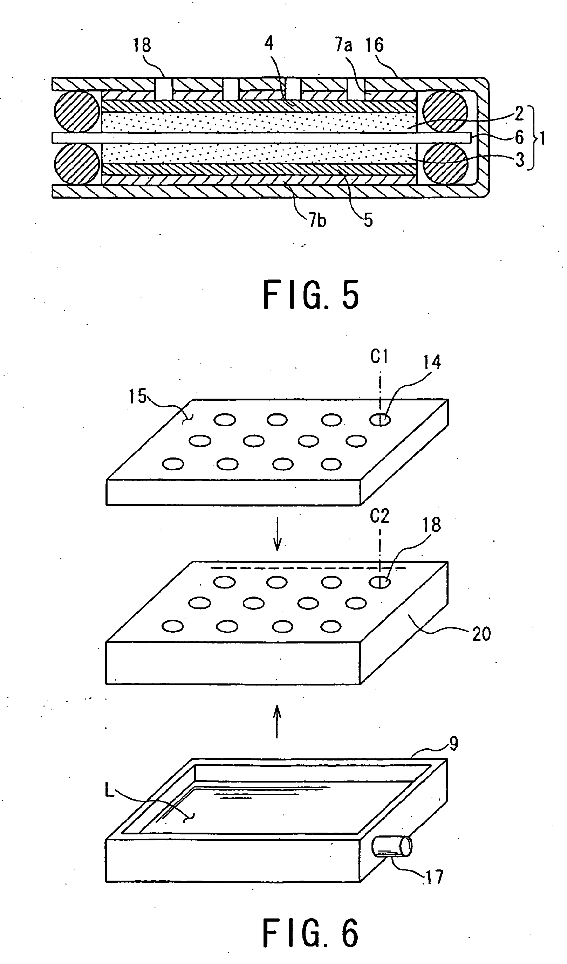

As shown in FIG. 5, the power generating part comprising the membrane electrode assembly 1 and the respective conductive layers 7a, 7b has a structure in which the respective conductive layers 7a, 7b are tightly adhered to the cathode catalyst layer 2 and the anode catalyst layer 3.

Subsequently, as shown in FIG. 6, an outer case 15 formed with the air intake ports 14 is attached to an upper portion of the power generating part 20. On the other hand, a fuel tank 9 storing the liquid fuel L is attached to a lower portion of the power generating part 20, thereby to effectively manufacture the fuel cell shown in FIG. 1.

In this connection, shown in FIG. 6, when the fuel cell is configured such that the insulating film 16 and the cathode conductive layer 7a are provided with an air intake port 18 for supplying the air to the cathode catalyst layer 2, and a central axis C2 of the air intake port 18 is substantially coincide with a central axis C1 of an air intake port 14 formed to the outer case 15, a circulation or distribution of air at the power generating part of the cell becomes smooth, so that a cell reaction can be effectively advanced.

According to the above fuel cell of this embodiment, since the cathode conductive layer 7a and the anode conductive layer 7b are formed under a state where the cathode conductive layer 7a and the anode conductive layer 7b are integrated onto one sheet of the insulating film 16, a step of forming the conductive layers 7a, 7b can be greatly simplified in comparison with a case where the cathode conductive layer 7a and the anode conductive layer 7b are separately and independently formed onto the insulating film 16.

Further, since the fuel cell has a structure in which the one sheet of the insulating film 16 to which both the cathode conductive layer 7a and the anode conductive layer 7b are integrated is folded in the middle and the membrane electrode assembly 1 is accommodated in an inner space formed in the half-folded insulating film 16, it becomes possible to position the cathode conductive layer 7a and the anode conductive layer 7b so as to respectively oppose to the cathode catalyst layer 2 and the anode catalyst layer 3 of the membrane electrode assembly 1 with a high accuracy positioning. In addition, it becomes easy to position the conductive layers 7a and 7b, and the short-circuit defects caused by the displacement of the conductive layers 7a and 7b can be eliminated, so that the defective fraction of the fuel cell can be effectively reduced.

According to the embodiment of the direct methanol type fuel cell as described above, the liquid fuel (for example, methanol aqueous solution) stored in the liquid fuel tank 9 is vaporized, the vaporized methanol and water are once accommodated within an upper space of the fuel tank 9. Then, the vaporized methanol and water gradually diffuse in the anode gas diffusing layer 5 thereby to be supplied to the anode catalyst layer 3. As a result, an internal reforming reaction of methanol is taken place in accordance with the following reaction formula (1).

CH₃OH + H₂O → CO₂ + 6H⁺ + 6e⁻ (1)

Further, in a case where a pure methanol is used as the liquid fuel, there is no water supplied from the fuel tank 9, so that the water generated by the oxidation reaction of the methanol mixed in the cathode catalyst layer 2 or a moisture content or the like in the proton conductive electrolyte membrane reacts with methanol. As a result, the internal reforming reaction in accordance with the reaction formula (1) is taken place, or the internal reforming reaction not depending on the aforementioned reaction formula (1) is taken place in a reaction mechanism without using the water.

A proton (H⁺) generated by the above internal reforming reaction diffuses in the proton conductive electrolyte membrane 6, and then arrives at the cathode catalyst layer 3. On the other hand, the air introduced from the air intake port 14 of the surface layer 15 diffuses in both the moisture retaining plate 13 and the air intake port 18 of the cathode conductive layer 7a. Then, the air further diffuses in the cathode gas diffusing layer 4 thereby to be supplied to the cathode catalyst layer 2. In the cathode catalyst layer 2, a reaction shown in the following reaction formula (2) is taken place thereby to generate water. Namely, a power generating reaction is taken place.

(3/2)O₂ + 6H⁺ + 6e⁻ →3H₂O (2)

When the power generating reaction is advanced, the water generated in the cathode catalyst layer 2 in accordance with the reaction formula (2) diffuses in the cathode gas diffusing layer 4, and arrives at the moisture retaining plate 13. An evaporation of the water is inhibited by the moisture retaining plate 13 thereby to increase a water storing amount in the cathode catalyst layer 2. Therefore, in accordance with an advancement of the power generating reaction, there can be realized a state where the moisture retaining amount of the cathode catalyst layer 2 is larger than that of the anode catalyst layer 3

As a result, due to an osmotic-pressure phenomena, it becomes possible to effectively promote a diffusion reaction for transferring (diffusing) the water generated at the cathode catalyst layer 2 to the anode catalyst layer 3 through the proton conductive electrolyte membrane 6. Therefore, a water-supplying rate to the anode catalyst layer 3 can be increased in comparison with a case where the water-supplying rate depends on only the fuel vaporizing layer, and the internal reforming reaction shown in the reaction formula (1) can be promoted. Therefore, an output power density can be increased and it becomes possible to maintain such a high output power density for a long time period.

Furthermore, when a methanol aqueous solution having a concentration exceeding 50 mol% or a pure methanol is used as the liquid fuel, the water diffused from the cathode catalyst layer 2 to the anode catalyst layer 3 is mainly used for the internal reforming reaction, so that an operation for supplying the water to the anode catalyst layer 3 can be stably advanced whereby the reaction resistance of the internal reforming reaction can be further decreased and a long-term output power characteristic and a load current characteristic of the fuel cell can be further improved. In addition, it is also possible to miniaturize a size of the liquid fuel tank. In this connection, a purity of the pure methanol is preferably set to a range from 95 to 100 mass%.

The liquid fuel to be used in the fuel cell of the present invention is not always limited to methanol fuel. For example, ethanol fuels such as ethanol aqueous solution, pure ethanol or the like, dimethyl ether, formic acid or other liquid fuels can be also used. At any rate, a liquid fuel in compliance with a fuel cell is suitably used, and accommodated (injected) in the liquid fuel tank 9.

In this connection, the inventors of the present invention had investigated a relationship between a maximum output power and a thickness of the proton conductive electrolyte membrane of the fuel cell in which a perfluoro-carbon type proton conductive electrolyte membrane was used. As a result, in order to realize a high output power, the thickness of the proton conductive electrolyte membrane 6 is preferably set to 100 µm or less. The reason why the high output power can be obtained by setting the thickness of the proton conductive electrolyte membrane 6 to 100µm or less is that it becomes possible to further promote the diffusion of water from the cathode catalyst layer 2 to the anode catalyst layer 3.

In this regard, when the thickness of the proton conductive electrolyte membrane 6 is set to less than 10µm, there may be posed a fear that a strength of the proton conductive electrolyte membrane 6 is disadvantageously lowered. Therefore, it is preferable to set the thickness of the proton conductive electrolyte membrane 6 to within a range of 10 - 100 µm, more preferable to set to within a range of 10 - 80µm.

The present invention is not particularly limited to the aforementioned respective embodiments, and can be modified as far as the invention adopts a structure in which the water generated at the cathode catalyst layer 2 is supplied to the anode catalyst layer 3 through the proton conductive membrane 6, so that the operation for supplying the water to the anode catalyst layer 3 and the water-supplying operation is stably performed.

### (Example)

Hereunder, examples of the present invention will be more concretely explained with reference to the accompanying drawings.

### < Preparation of Anode Pole >

Perfluoro-carbon sulfonic acid solution, water and methoxy propanol were added to carbon black supporting anode catalyst (Pt:Ru=1:1), so that a paste in which above the carbon black supporting anode catalyst was dispersed was prepared. Thus prepared paste was coated on a porous carbon paper as an anode gas diffusing layer 5, thereby to prepare an anode pole comprising an anode catalyst layer 3 having a thickness of 450 µm.

### < Preparation of Cathode Pole>

Perfluoro-carbon sulfonic acid solution, water and methoxy propanol were added to carbon black supporting cathode catalyst (Pt), so that a paste in which above the carbon black supporting cathode catalyst was dispersed was prepared. Thus prepared paste was coated on a porous carbon paper as a cathode gas diffusing layer 4, thereby to prepare a cathode pole comprising a cathode catalyst layer 2 having a thickness of 400 µm.

A perfluoro-carbon sulfonic acid membrane (nafion membrane; manufactured by E. I. Du Pont de Nemours & Co.) having a thickness of 30 µm and a moisture content of 10 - 20 weight% was provided as a proton conductive electrolyte membrane to a portion between the anode catalyst layer 3 and the cathode catalyst layer 2, thereby to form a laminated body. Then, the laminated body was subjected to a hot pressing operation thereby to prepare a membrane electrode assembly (MEA) 1 as shown in FIG . 4

On the other hand, as shown in FIG. 2, a polyethylene terephthalate (PET) film was prepared as the flexible insulating film 16. Then, conductive layers for cathode and anode were cut out such that the conductive layers have a spread-out shape and are adjacent to each other on the same plane as shown in FIG. 3.

Next, as shown in FIG. 3, there was prepared a conductive layer pattern formed by spreading out a cathode conductive layer 7a and an anode conductive layer 7b on a plane. The cathode conductive layer 7a and the anode conductive layer 7b are composed of gold foil, and have predetermined pattern shapes corresponding to shapes of the cathode catalyst layer 2 and the anode catalyst layer 3 that are formed to the membrane electrode assembly (MEA) 1. Thus prepared conductive layer pattern was adhered to the flexible insulating film 16 by using an adhesive agent thereby to integrally fix the conductive layer pattern.

In addition, the integrated cathode conductive layer 7a and the insulating film 16 were perforated to form a plurality of air intake ports 18 for introducing air as an oxidizing agent therein.

Subsequently, as shown in FIG. 4, the one sheet of the insulation film 16 to which the cathode conductive layer 7a and the anode conductive layer 7b are integrally fixed was folded in the middle thereby to form an inner space within the folded film. Then, the above membrane electrode assembly 1 was accommodated into the inner space thereby to configure a power generating part 20.

At this time, relative positions of the respective opposing patterns, i.e. the cathode conductive layer 7a and the anode catalyst layer 2, or the anode conductive layer 7b and the anode catalyst layer 3, are unambiguously defined on a basis of the folding position of the insulating film 16, so that the accuracy in positioning the respective combined patterns can be increased to be high.

Next, as shown in FIG. 5, there was prepared an outer case 15 composed of stainless steel (SUS304) and provided with a plurality of air intake ports 14 for introducing the air to be supplied to the power generating part 20. In this regard, the outer case 15 and the power generating part 20 were configured such that a central axis C1 of the air intake port 14 provided to the outer case 15 was coincide with a central axis C2 of an air intake port 18 formed to the power generating part 20.

Thereafter, the outer case 15 was integrally fixed onto an upper portion of the power generating part 20, while a fuel tank 9 was attached to a lower portion of the power generating part 20. Further, 2mL of pure methanol having a purity of 99.9 wt% was injected into the fuel tank 9 through the fuel intake port 17, so that there was assembled an internal vaporization type direct methanol fuel cell according to Example having the aforementioned structure shown in FIG 1.

### (Comparative Example)

On the other hand, the same manufacturing process as in Example was repeated except that the cathode conductive layer and the anode conductive layer were not formed by adhering onto one sheet of insulating film but prepared by separately and independently form the respective conductive layers and each of the cathode conductive layer and the anode conductive layer was sequentially laminated thereby to form a power generating part. As a result, a direct methanol type fuel cell according to Comparative Example having the substantially same size as in Example shown in FIG. 1 was assembled.

According to the fuel cell of Example, since the cathode conductive layer 7a and the anode conductive layer 7b were formed under a state where the cathode conductive layer 7a and the anode conductive layer 7b were integrated onto one sheet of the insulating film 16, a step of forming the conductive layers 7a, 7b could be greatly simplified in comparison with a case where the cathode conductive layer 7a and the anode conductive layer 7b were separately and independently formed onto the insulating film 16.

Further, since the fuel cell has a structure in which the one sheet of the insulating film 16 to which both the cathode conductive layer 7a and the anode conductive layer 7b were integrated was folded in the middle and the membrane electrode assembly 1 was accommodated in an inner space formed within the half-folded insulating film 16, it became possible to position the cathode conductive layer 7a and the anode conductive layer 7b so as to respectively oppose to the cathode catalyst layer 2 and the anode catalyst layer 3 of the membrane electrode assembly 1 with a high accuracy in positioning. In addition, it became easy to position the conductive layers 7a and 7b, and the short-circuit defects caused by the displacement of the conductive layers 7a and 7b could be eliminated, so that the defective fraction of the fuel cell could be effectively reduced to be almost zero.

In contrast, in case of the fuel cell according to Comparative Example in which the cathode conductive layer and the anode conductive layer were separately and independently formed and each of the cathode conductive layer and the anode conductive layer was laminated one by one thereby to form the power generating part, the conductive layers (electrodes) were liable to be twisted thereby to lower the positioning accuracy. The fraction of defectives such as short-circuit or the like caused by the displacement of the collectors in Comparative Example was increased up to 4 - 6%, and a working time required for positioning the respective layers was increased up to 65% in comparison with that of Example.

As a result, according to the fuel cell of this Example, the following remarkable effects could be obtained. Namely, since the fuel cell had a structure in which the membrane electrode assembly was accommodated into the inner space formed in the half-folded insulating film, it became possible to position the cathode conductive layer and the anode conductive layer so as to respectively oppose to the cathode catalyst layer and the anode catalyst layer of the membrane electrode assembly with a high accuracy in positioning. In addition, it became easy to position the conductive layers, and the defects such as short-circuit or the like caused by the displacement of the conductive layers could be eliminated, so that the defective fraction of the fuel cell could be effectively reduced to be almost zero.

## Claims

1. A fuel cell comprising:
a plurality of cathode catalyst layers (2) provided in a planar direction;
a plurality of anode catalyst layers (3) provided in a planar direction so as to correspond to the cathode catalyst layers (2),
a membrane electrode assembly (1) including a proton conductive membrane (6) disposed between the cathode catalyst layers (2) and the anode catalyst layers (3),
a plurality of cathode conductive layers (7a) provided to a side of the cathode catalyst layers (2) of the membrane electrode assembly (1); and
a plurality of anode conductive layers (7b) provided to a side of the anode catalyst layers (3) of the membrane electrode assembly (1);
wherein the cathode conductive layers (7a) and the anode conductive layers (7b) are integrated onto one sheet of insulating film (16) and the integrated insulation film is folded in two so that the membrane electrode assembly (1) is accommodated in an inner space formed in the folded insulating film (16).

2. The fuel cell according to claim 1 further comprising an outer case (15) having an air intake port (14) for supplying air to the cathode catalyst layers (2).

3. The fuel cell according to claim 2, wherein the insulating film (16) and the cathode conductive layers (7a) are provided with an air intake port for supplying the air to the cathode catalyst layers (2), and a central axis of the air intake port (14) is coincident with a central axis of an air intake port formed to the outer case (15).

4. The fuel cell according to any preceding claim, further comprising a liquid fuel tank (9) for storing a fuel and supplying the liquid fuel to the anode catalyst layers (3).

## Patentansprüche

1. Brennstoffzelle umfassend:
eine Vielzahl von Kathodenkatalysatorschichten (2), die in einer planaren Richtung bereitgestellt werden;
eine Vielzahl von Anodenkatalysatorschichten (3), die in einer planaren Richtung bereitgestellt werden, um den Kathodenkatalysatorschichten (2) zu entsprechen,
einen Membranelektrodenzusammenbau (1), der eine protonenleitende Membran (6) umfasst, die zwischen den Kathodenkatalysatorschichten (2) und den Anodenkatalysatorschichten (3) angeordnet ist,
eine Vielzahl von kathodenleitfähigen Schichten (7a), die auf einer Seite der Kathodenkatalysatorschichten (2) des Membranelektrodenzusammenbaus (1) bereitgestellt werden; und
eine Vielzahl von anodenleitfähigen Schichten (7b), die auf einer Seite der Anodenkatalysatorschichten (3) des Membranelektrodenzusammenbaus (1) bereitgestellt werden;
wobei die kathodenleitfähigen Schichten (7a) und die anodenleitfähigen Schichten (7b) auf einem Bogen einer isolierenden Folie (16) integriert sind und die integrierte isolierende Folie in die Hälfte gefaltet wird, so dass der Membranelektrodenzusammenbau (1) in einem Innenraum untergebracht wird, der in der gefalteten isolierenden Folie (16) gebildet wird.

2. Brennstoffzelle nach Anspruch 1, des Weiteren ein Außengehäuse (15) umfassend, das eine Lufteinlassöffnung (14) für das Anliefern von Luft an die Kathodenkatalysatorschicht (2) aufweist.

3. Brennstoffzelle nach Anspruch 2, wobei die isolierende Folie (16) und die kathodenleitfähigen Schichten (7b) mit einer Lufteinlassöffnung für das Anliefern von Luft an die Kathodenkatalysatorschichten (2) ausgestattet sind und eine Zentralachse der Lufteinlassöffnung (14) mit einer Zentralachse der am Außengehäuse (15) gebildeten Lufteinlassöffnung zusammenfällt.

4. Brennstoffzelle nach einem der vorhergehenden Ansprüche, des Weiteren einen Tank (9) für flüssigen Brennstoff für das Lagern eines Brennstoffs und Anliefern des flüssigen Brennstoff ans die Anodenkatalysatorschichten (3) umfassend.

## Revendications

1. Pile à combustible comprenant:
une pluralité de couches de catalyseur de cathode (2) fournies dans une direction plane;
une pluralité de couches de catalyseur d'anode (3) fournies dans une direction plane de manière à correspondre aux couches de catalyseur de cathode (2),
un ensemble d'électrode à membrane (1) incluant une membrane conductrice de protons (6) disposée entre les couches de catalyseur de cathode (2) et les couches de catalyseur d'anode (3),
une pluralité de couches conductrices de cathode (7a) fournies d'un côté des couches de catalyseur de cathode (2) de l'ensemble d'électrode à membrane (1); et
une pluralité de couches conductrices d'anode (7b) fournies d'un côté des couches de catalyseur d'anode (3) de l'ensemble d'électrode à membrane (1);
dans laquelle les couches conductrices de cathode (7a) et les couches conductrices d'anode (7b) sont intégrées sur une feuille de pellicule isolante (16) et la pellicule isolante intégrée est pliée en deux de sorte que l'ensemble d'électrode à membrane (1) est logé dans un espace intérieur formé par la pellicule isolante pliée (16).

2. La pile à combustible de la revendication 1, comprenant en outre un boîtier externe (15) ayant un orifice de prise d'air (14) pour fournir de l'air aux couches de catalyseur de cathode (2).

3. La pile à combustible selon la revendication 2, dans laquelle la pellicule isolante (16) et les couches conductrices de cathode (7a) sont fournies avec un orifice de prise d'air pour fournir de l'air aux couches de catalyseur de cathode (2), et un axe central de l'orifice de prise d'air (14) coïncide avec un axe central d'un orifice de prise d'air formé dans le boîtier externe (15).

4. La pile à combustible de l'une quelconque des revendications précédentes, comprenant en outre un réservoir (9) de combustible liquide pour stocker un combustible et fournir le combustible liquide aux couches de catalyseur d'anode (3).
